# EUROPÄISCHE PATENTSCHRIFT

(11) **EP 4 327 209 B1**
(45) Veröffentlichungstag und Bekanntmachung des Hinweises auf die Patenterteilung: **06.11.2024**
(21) Anmeldenummer: 22730685.9
(22) Anmeldetag: 18.05.2022
(51) Int. Cl.: G06F 11/14, G06F 11/20

(54) **DATENSICHERUNGSVORRICHTUNG**
DATA BACKUP DEVICE
DISPOSITIF DE SAUVEGARDE DE DONNÉES

(30) Priorität: 17.09.2021 DE 102021124130
(43) Veröffentlichungstag der Anmeldung: 28.02.2024
(73) Patentinhaber: SCHWEPPENHÄUSER, Klemens, 88634 Herdwangen-Schönach (DE)
(72) Erfinder: SCHWEPPENHÄUSER, Moritz, 88634 Herdwangen-Schönach (DE)
(74) Vertreter: Otten, Roth, Dobler & Partner mbB Patentanwälte
(86) Internationale Anmeldenummer: PCT/EP2022/063425
(87) Internationale Veröffentlichungsnummer: WO 2023/041207

(56) Entgegenhaltungen:
- EP-A2- 0 945 801
- DE-A1- 102013 103 291
- US-A1- 2018 217 772
- US-A1- 2019 354 475

## Beschreibung

### Stand der Technik

Datensicherungsvorrichtungen zur Sicherung von Daten sind bereits bekannt. So ist beispielseweise ein Datenspeichersytem aus der US 2018/0217772 A1, der EP 0945801 A2 oder der US 2019/0354475 A1 bekannt. Für eine zuverlässige und sichere Datensicherung sind insbesondere die Regelmäßigkeit der Datensicherung, der Standort der gesicherten Daten und die Angreifbarkeit bzw. Zugriffmöglichkeiten auf die gesicherten Daten für einen externen Dritten ausschlaggebend.

Bekannt ist beispielsweise eine Datensicherung von Daten auf eine erste Festplatte, wobei diese erste Festplatte regelmäßig, z.B. täglich oder wöchentlich durch eine weitere Festplatte getauscht wird und die erste Festplatte an einen anderen Ort gebracht wird. Hierdurch ist eine Zugriffsmöglichkeit eines Dritten auf die Daten auf der ersten Festplatte beschränkt, sowie aufgrund des anderen Standorts der ersten Festplatte gegenüber dem Standort des Systems, von welchem die Daten stammen, auch eine gewisse Datensicherheit im Hinblick auf Umwelteinflüsse, wie Wasser oder Feuer gewährleistet.

Nachteilig an dieser Lösung ist der vergleichsweise hohe manuelle Aufwand der betrieben werden muss, um die Sicherheit zu realisieren.

### Aufgabe und Vorteile der Erfindung

Der Erfindung liegt die Aufgabe zugrunde, eine verbessertes Verfahren zur Datensicherung bereitzustellen. Insbesondere ein verbessertes Verfahren zur Datensicherung bereitzustellen, mittels welchem der regelmäßige Aufwand zur Datensicherung bei einem vergleichbaren Sicherheitsstandard reduziert ist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einem Verfahren zur Datensicherung aus, wobei das Verfahren folgende, beispielsweise aufeinander folgende, Verfahrensschritte aufweist:
- Anschalten einer Energieversorgung eines ersten Datenspeicherelements einer Datensicherungsvorrichtung durch eine Kontrolleinheit der Datensicherungsvorrichtung,
- Aktivieren einer Verarbeitungseinheit der Datensicherungsvorrichtung durch die Kontrolleinheit
- Aufbau einer Datenverbindung der Verarbeitungseinheit mit dem ersten Datenspeicherelement
- Aufbau einer Datenverbindung der Verarbeitungseinheit mit einem Datenspeicher
- Abfrage des Datenspeichers durch die Verarbeitungseinheit
- Speichern der vom Datenspeicher abgefragten Daten auf dem Datenspeicherelement durch die Verarbeitungseinheit
- Deaktivieren der Verarbeitungseinheit
- Abschalten der Energieversorgung des ersten Datenspeicherelements durch die Kontrolleinheit

Beispielsweise ist hierdurch ein vergleichsweise kostengünstige Datensicherung in Form einer Backuplösung realisierbar, wobei die Backup-Speicher, z.B. die Datenspeicherelemente, durch die Lösung immer nur dann aktiviert sind, wenn ein Backup geschrieben wird. Beispielsweise ist hierdurch eine Sicherheit erhöht.

Beispielsweise umfasst das Verfahren einen der folgenden weiteren Verfahrensschritte:
- Anschalten einer Energieversorgung des, beispielsweise einzigen, ersten Datenspeicherelements der Datensicherungsvorrichtung durch eine Kontrolleinheit der Datensicherungsvorrichtung, wenn eine Zeit einer Zeitvorgabeeinheit eine Vorgabezeit erreicht hat
- Trennen der Datenverbindung der Verarbeitungseinheit mit dem ersten Datenspeicherelement und Trennen der Datenverbindung der Verarbeitungseinheit mit dem Datenspeicher
- Prüfen durch die Kontrolleinheit, ob die Verarbeitungseinheit ausgeschaltet, deaktiviert und/oder heruntergefahren ist

Beispielsweise kann hierdurch eine regelmäßige, insbesondere automatische Datensicherung zur Verfügung gestellt werden.

Beispielsweise ist unter Deaktivieren der Verarbeitungseinheit ein Abschalten der Verarbeitungseinheit zu verstehen. Erfindungsgemäß ist unter Deaktivieren der Verarbeitungseinheit ein Trennen von der Energieversorgung zu verstehen.

Vorstellbar ist weiterhin, dass das Anschalten und/oder das Abschalten der Energieversorgung eines Datenspeicherelements und/oder der Verarbeitungseinheit manuell und/oder von einem externen Vorrichtung erfolgen kann und damit unabhängig von einer Zeit der Zeitvorgabeeinheit erfolgen kann. Auch ist es weiter vorstellbar, dass eine Datensicherung durch die Verarbeitungseinheit nach dem vorangegangen genannten Verfahren manuell oder von einer externen Vorrichtung aktiviert oder angestoßen wird.

Weiter wird vorgeschlagen, dass das Verfahren zur Datensicherung die weiteren, beispielsweise aufeinander folgenden, Verfahrensschritte aufweist:
- Abfragen einer Zeit einer Zeitvorgabeeinheit der Datensicherungsvorrichtung durch die Kontrolleinheit der Datensicherungsvorrichtung
- Abgleichen der abgefragten Zeit der Zeitvorgabeeinheit mit einer in der Kontrolleinheit abgespeicherten Vorgabezeit durch ein Steuerungsmodul der Kontrolleinheit

Beispielsweise ist die Kontrolleinheit dazu ausgebildet, kontinuierlich die Zeit der Zeitvorgabeeinheit abzufragen. Zum Beispiel ist das Steuerungsmodul der Kontrolleinheit dazu ausgebildet, kontinuierlich die Zeit der Zeitvorgabeeinheit abzufragen. Denkbar ist auch, dass die Zeitvorgabeeinheit eine Zeit der Zeitvorgabeeinheit kontinuierlich, z.B. in regelmäßigen Zeitschritten an die Kontrolleinheit, beispielsweise an das Steuerungsmodul der Kontrolleinheit übermittelt oder bereitstellt.

Beispielsweise umfasst das Verfahren folgende weitere Verfahrensschritte:
- Kontinuierliches oder zyklisches Abfragen einer Zeit der Zeitvorgabeeinheit einer Datensicherungsvorrichtung durch die Kontrolleinheit der Datensicherungsvorrichtung
- Kontinuierliches oder zyklisches Abgleichen der abgefragten Zeit der Zeitvorgabeeinheit mit einer in der Kontrolleinheit abgespeicherten Vorgabezeit durch ein Steuerungsmodul der Kontrolleinheit

Beispielsweise gleicht die Kontrolleinheit kontinuierlich, z.B. immer, die abgefragte oder bereitgestellte Zeit der Zeitvorgabeeinheit mit einer in der Kontrolleinheit, beispielsweise in einem Speichermodul der Kontrolleinheit abgelegten Vorgabezeit ab. Beispielsweise sind im Steuerungsmodul mehrere Vorgabezeiten abgespeichert und die Kontrolleinheit prüft kontinuierlich, ob eine Zeit der Zeitvorgabeeinheit eine der abgespeicherten Vorgabezeiten erreicht hat. Beispielsweise wird hierdurch eine tägliche oder wöchentliche Datensicherung realisiert. Beispielsweise umfasst die Kontrolleinheit eine Speichereinheit, auf welcher die Vorgabezeit abgespeichert ist.

Außerdem wird vorgeschlagen, dass das Verfahren zur Datensicherung die weiteren, beispielswiese aufeinander folgenden, Verfahrensschritte aufweist:
- Anschalten einer Energieversorgung eines zweiten Datenspeicherelements der Datensicherungsvorrichtung durch die Kontrolleinheit, wenn eine Zeit der Zeitvorgabeeinheit eine weitere Vorgabezeit erreicht hat
- Aktivieren der Verarbeitungseinheit durch die Kontrolleinheit
- Aufbau einer Datenverbindung der Verarbeitungseinheit mit dem zweiten Datenspeicherelement
- Aufbau der Datenverbindung der Verarbeitungseinheit mit dem Datenspeicher und/oder einem weiteren Datenspeicher
- Abfrage des Datenspeichers durch die Verarbeitungseinheit
- Speichern der vom Datenspeicher abgefragten Daten auf dem zweiten Datenspeicherelement durch die Verarbeitungseinheit
- Ausschalten, Deaktivieren und/oder Herunterfahren der Verarbeitungseinheit
- Abschalten einer Energieversorgung des zweiten Datenspeicherelements durch die Kontrolleinheit

Beispielswiese ist hierdurch eine Datensicherungslösung realisiert, mittels welcher mehrere Zeitpunkte der Datensicherung bereitgestellt werden können, um bei Bedarf auf einen der Zeitpunkte zur Wiederherstellung von Daten auf Basis der jeweiligen Datensicherung zurückgreifen zu können.

Vorteilhafterweise ist die Kontrolleinheit dazu ausgebildet, immer nur ein einziges Datenspeicherelement mit Energie zu versorgen, während durch die Kontrolleinheit alle weiteren Datenspeicherelemente energielos bzw. stromlos geschaltet sind.

Beispielsweise ist die Kontrolleinheit dazu ausgebildet, die Datenspeicherelemente zyklisch mit Strom bzw. mit Energie zu versorgen. Beispielsweise gleicht die Kontrolleinheit die Zeit der Zeitvorgabeeinheit mit einer Vorgabezeit ab und Aktiviert bei Erreichen der Vorgabezeit die Stromversorgung eines einzigen Datenspeicherelements, z.B. des ersten Datenspeicherelements, wobei die Kontrolleinheit dazu ausgebildet ist, die Stromversorgung aller verbleibenden Datenspeicherelemente, z.B. des zweiten Datenspeicherelements, abzuschalten, sodass immer nur ein einziges Datenspeicherelement gleichzeitig mit Strom bzw. Energie durch die Kontrolleinheit versorgt ist. Beispielsweise ist die Kontrolleinheit dazu ausgebildet, alle Datenspeicherelemente stromlos zu schalten, nachdem eine Datenspeicherung beendet ist. Denkbar ist, dass die Kontrolleinheit prüft, ob die Verarbeitungseinheit die Datenspeicherung beendet hat und deaktiviert ist und erst nach Deaktivierung der Verarbeitungseinheit das Datenspeicherelement, beispielsweise alle Datenspeicherelemente, stromlos schaltet. Beispielsweise prüft die Kontrolleinheit zyklisch oder kontinuierlich einen Zustand der Verarbeitungseinheit.

Beispielsweise ist die Kontrolleinheit dazu ausgebildet, dass die Kontrolleinheit, bei Erreichen einer Vorgabezeit die vorhandenen Datenspeicherelemente rollierend bzw. periodisch aktiviert. Z.B. umfasst die Datensicherungsvorrichtung sieben Datenspeicherelemente und für jede Woche sieben Vorgabezeiten, z.B. für jeden Wochentag eine Vorgabezeit, sodass in jeder Woche das erste Datenspeicherelement z.B. an einem Montag aktiviert wird und die Daten von einem Datenspeicher immer montags auf dem ersten Datenspeicherelement abgespeichert werden, das zweite Datenspeicherelement, z.B. an einem Dienstag aktiviert wird und die Daten von einem Datenspeicher immer dienstags auf dem zweiten Datenspeicherelement abgespeichert werden, usw..

Beispielsweise ist die Vorgabezeit als ein Zyklus vorhanden, z.B. alle 12 Stunden, alle 24 Stunden, alle 7 Tage und/oder jeden Monat. Beispielsweise ist durch die Vorgabezeit eine Startvorgabezeit definiert ist, an welcher der Zyklus startet, wenn die Zeit der Zeitvorgabeeinheit die Vorgabezeit erreicht oder überschreitet.

Beispielsweise umfasst das vorgeschlagene Verfahren zur Datensicherung folgende Verfahrensschritte, wobei die Verfahrensschritte beispielsweise in der genannten Reihenfolge nacheinander erfolgen:
- Kontinuierliches oder zyklisches Abfragen der Zeit der Zeitvorgabeeinheit der Datensicherungsvorrichtung durch die Kontrolleinheit der Datensicherungsvorrichtung
- Kontinuierliches oder zyklisches Abgleichen der abgefragten Zeit der Zeitvorgabeeinheit mit der in der Kontrolleinheit abgespeicherten Vorgabezeit durch das Steuerungsmodul der Kontrolleinheit
- Anschalten der Energieversorgung des ersten Datenspeicherelements der Datensicherungsvorrichtung durch die Kontrolleinheit der Datensicherungsvorrichtung, wenn die Zeit der Zeitvorgabeeinheit eine Vorgabezeit erreicht hat
- Aktivieren der Verarbeitungseinheit durch die Kontrolleinheit
- Aufbau einer Datenverbindung der Verarbeitungseinheit mit dem ersten Datenspeicherelement
- Aufbau einer Datenverbindung der Verarbeitungseinheit mit einem Datenspeicher
- Abfrage des Datenspeichers durch die Verarbeitungseinheit
- Speichern der vom Datenspeicher abgefragten Daten auf dem Datenspeicherelement durch die Verarbeitungseinheit
- Trennen der Datenverbindungen der Verarbeitungseinheit mit dem ersten Datenspeicherelement und dem Datenspeicher
- Deaktivieren der Verarbeitungseinheit
- Abschalten der Energieversorgung des ersten Datenspeicherelements durch die Kontrolleinheit

Vorstellbar ist weiterhin, dass die Verarbeitungseinheit, z.B. zyklisch, eine Datenverbindung mit unterschiedlichen Datenspeichern aufbaut. Z.B. baut die Verarbeitungseinheit nach Erreichen oder Überschreiten einer ersten Vorgabezeit eine Datenverbindung mit einem ersten Datenspeicher auf und speichert die Daten des ersten Datenspeichers auf das erste Datenspeicherelement und baut nach Erreichen oder Überschreiten einer weiteren, z.B. einer zweiten Vorgabezeit, eine Datenverbindung mit einem weiteren, z.B. einem zweiten, Datenspeicher auf und speichert die Daten des weiteren Datenspeichers auf das erste oder ein weiteres, z.B. ein zweites, Datenspeicherelement. Beispielsweise verläuft das vorgenannte Verfahren zyklisch. Beispielsweise ist hierdurch eine Datensicherung verschiedener Datenspeicher oder Datenspeichersysteme realisierbar.

Weiter wird eine Datensicherungsvorrichtung vorgeschlagen, wobei die Datensicherungsvorrichtung dazu ausgebildet ist, ein Verfahren nach einer der vorangegangen genannten Varianten auszuführen, wobei die Datensicherungsvorrichtung eine Datenschnittstelle aufweist, wobei die Datensicherungsvorrichtung mittels der Datenschnittstelle mit einem Datenspeicher verbindbar ist, wobei die Datensicherungsvorrichtung eine Verarbeitungseinheit aufweist, wobei die Datensicherungsvorrichtung zwei oder mehr Datenspeicherelemente aufweist, wobei die Datenspeicherelemente dazu ausgebildet sind, Daten des Datenspeichers abzuspeichern, wobei die Verarbeitungseinheit dazu ausgebildet ist, die Datensicherungsvorrichtung über die Datenschnittstelle mit dem Datenspeicher zu verbinden, Daten vom Datenspeicher abzufragen und auf einem der Datenspeicherelemente der Datensicherungsvorrichtung abzuspeichern, wobei die Datensicherungsvorrichtung eine Kontrolleinheit aufweist, wobei die Kontrolleinheit eine Schaltvorrichtung, eine Zeitvorgabeeinheit und ein Steuerungsmodul umfasst, wobei die Datenspeicherelemente mit der Schaltvorrichtung elektrisch leitend verbunden sind und ausschließlich durch die Schaltvorrichtung mit Energie versorgt werden, wobei jedes Datenspeicherelement mittels einer separaten Stromleitung mit der Schaltvorrichtung verbunden ist, sodass jedes Datenspeicherelement durch die Schaltvorrichtung separat mit Energie versorgbar ist, wobei die Zeitvorgabeeinheit eine Zeit an das Steuerungsmodul ausgibt, wobei die Kontrolleinheit dazu ausgebildet ist, die Verarbeitungseinheit von der Energieversorgung zu trennen.

Beispielsweise ist das Steuerungsmodul dazu ausgebildet, abhängig von einer Zeit der Zeitvorgabeeinheit die Schaltvorrichtung anzusteuern, sodass eine Energieversorgung eines Datenspeicherelements aktiviert oder deaktiviert wird. Beispielsweise ist die Zeitvorgabeeinheit als eine Realtimeclock und/oder als ein Zeitserver ausgebildet. Zum Beispiel ist die Kontrolleinheit dazu ausgebildet vom Zeitserver ein Zeitsignal zu empfangen. Denkbar ist auch, dass die Kontrolleinheit ein GPS-Modul aufweist und ein Signal, insbesondere ein Zeitsignal, des GPS-Moduls abgleicht.

Beispielsweise weist die Datensicherungsvorrichtung ein, zwei, drei, vier, fünf, sechs, sieben oder mehr Datenspeicherelemente auf. Beispielsweise ist die Kontrolleinheit dazu ausgebildet, abhängig von einer Zeit der Zeitvorgabeeinheit die Verarbeitungseinheit zu aktivieren und zeitgleich, zeitlich davor oder zeitlich danach die Stromversorgung eines beispielsweise einzigen der Datenspeicherelemente zu aktivieren oder anzuschalten. Vorteilhafterweise sind die Datenspeicherelemente physikalisch getrennt vorhanden. Beispielsweise sind die Datenspeicherelement gleich ausgebildet, zum Beispiel identisch. Beispielsweise ist ein Datenspeicherelement als ein Datenspeicher, z.B. als eine Festplatte vorhanden. Beispielsweise kann ein erstes Datenspeicherelement auch mehrere Datenspeicher, z.B. mehrere Festplatten umfassen, welche logisch als eine Speichereinheit miteinander verknüpft sind. Beispielsweise ist hierdurch eine Speicherplatz definierbar, welcher größer ist, als der Speicherplatz eines einzigen Datenspeichers. Beispielsweise können hierdurch vergleichsweise große Daten-Images gespeichert werden und/oder Kosten vergleichsweise reduziert werden. Denkbar ist auch, dass ein Datenspeicherelement einen Festplattenverbund aufweist, z.B. in Form eines Netzwerkspeichers, z.B. in Form eines NAS-Systems. Beispielsweise ist durch die Ausbildung eines Datenspeicherelements als Festplattenverbund eine Speichergröße des Datenspeicherelements vorteilhaft vergrößert.

Beispielsweise ist der Datenspeicher als ein Netzwerkspeicher ausgebildet. Zum Beispiel sind im Datenspeicher Sicherungsdaten, z.B. in Form eines Backups, abgespeichert. Beispielsweise ist die Verarbeitungseinheit dazu ausgebildet, die Sicherungsdaten vom Datenspeicher abzufragen.

Beispielsweise ist die Datenschnittstelle als eine Netzwerkschnittstelle ausgebildet, z.B. als eine RJ45-Schnittstelle oder als ein WLAN-Schnittstelle. Denkbar ist jedoch auch, dass die Datenschnittstelle als eine USB-Schnittstelle und/oder als eine Mobilfunk-Schnittstelle, z.B. als eine LTE-Schnittstelle, vorhanden ist.

Beispielweise ist die Verarbeitungseinheit als eine Recheneinheit ausgebildet, z.B. als ein Computer oder als ein Server. Beispielsweise sind die Datenspeicherelemente Festplatten des Computers und mit der Recheneinheit mittels Standarddatenschnittstellen, z.B. in Form einer IDE-, eSATA- und/oder SATA-Schnittstelle, verbunden.

Beispielsweise sind alle Datenspeicherelemente oder mehrere Datenspeicherelement mittels einer einzigen Standarddatenschnittstelle mit der Verarbeitungseinheit verbunden. Zum Beispiel sind alle Datenspeicherelemente oder mehrere Datenspeicherelement mittels einem einzigen seriellen SATA-Bus mit der Verarbeitungseinheit verbunden. Dies hat den Vorteil, dass an der Verarbeitungseinheit ein einziger Schnittstellenkontroller notwendig ist, womit ein Kostenvorteil besteht. Beispielsweise können aufgrund dessen, dass immer nur ein Datenspeicherelement mit Energie versorgt ist, alle Datenspeicher an den gleichen Schnittstellenbus in einer parallelen Schaltungsanordnung angeschlossen werden.

Beispielsweise verläuft von der Verarbeitungseinheit ein Datenbus-Kabel zu einem letzten Datenspeicherelement. Beispielweise zweigt das Datenbus-Kabel vor dem letzten Datenspeicherelement an einer ersten Abzweigung ab (T-Schnittstelle), wobei von der ersten Abzweigung das Datenbus-Kabel zu einer ersten Datenspeicherelement verläuft. Beispielweise zweigt nach der ersten Abzweigung und vor dem letzten Datenspeicherelement am Datenbus-Kabel an einer zweiten Abzweigung (T-Schnittstelle) ein weiteres Datenbus-Kabel ab, welches zu einem zweiten Datenspeicherelement verläuft. Beispielsweise sind beliebig viele Abzweigungen zwischen dem letzten Datenspeicherelement und der ersten Abzweigung am Datenbus-Kabel vorhanden. Beispielsweise verläuft von jeder Abzweigung das Datenbus-Kabel zu einem Datenspeicherelement. Hierdurch sind die Datenspeicherelement mit der Verarbeitungseinheit über eine Parallelschaltung durch das Datenbus-Kabel miteinander verbunden.

Vorstellbar ist, dass das Datenbus-Kabel, die Abzweigungen und die von den Abzweigungen weiter verlaufenden Enden des Datenbus-Kabels einstückig, insbesondere unlösbar miteinander vorhanden sind. Denkbar ist, dass das Datenbus-Kabel als eine Leiterbahn auf einer Platine vorhanden ist.

Beispielsweise umfasst das Datenbus-Kabel fünf oder sieben Adern. Zum Beispiel umfasst das Datenbus-Kabel genau fünf oder genau sieben Adern. Beispielsweise sind sieben Leiterbahnen auf der Platine für das Datenbus-Kabel vorhanden. Beispielsweise umfasst das Datenbus-Kabel vier Adern zur Datenübertragung und mindestens eine Ader zur Übertragung der Masse. Denkbar ist, dass das Datenbus-Kabel drei Adern zur Übertragung der Masse aufweist.

Denkbar ist, dass die Verarbeitungseinheit einen Festplattenkontroller aufweist. Beispielsweise ist der Festplattenkontroller mit jedem der Datenspeicherelemente verbunden. Denkbar ist, dass der Festplattenkontroller über eine Parallelschaltung mit den Datenspeicherelemente verbunden ist. Beispielsweise ist der Festplattenkontroller mit allen Datenspeicherelementen verbunden. Vorstellbar ist weiterhin, dass eine Energieversorgung des Festplattenkontrollers mittels der Schaltvorrichtung schaltbar ist. Hierdurch ist eine Sicherheit der Datensicherungsvorrichtung erhöht. Beispielsweise ist der Festplattenkontroller Bestandteil der Verarbeitungseinheit. Denkbar ist jedoch auch, dass der Festplattenkontroller als ein von der Verarbeitungseinheit separates Element vorhanden ist und mit der Verarbeitungseinheit mittels einer Steuerleitung verbunden ist.

Vorstellbar ist auch, dass die Datensicherungsvorrichtung räumlich beabstandet zum Datenspeicher vorhanden ist, z.B. in einem anderen Gebäude. Denkbar ist auch, dass die Datensicherungsvorrichtung mittels der Datenschnittstelle über ein Netzwerk, z.B. über das Internet, mit dem Datenspeicher verbindbar ist. Vorstellbar ist auch, dass die Verarbeitungseinheit und die Datenspeicherelemente räumlich beabstandet vorhanden sind. Denkbar ist weiter, dass die Verarbeitungseinheit und die Kontrolleinheit räumlich beabstandet vorhanden sind, z.B. in verschiedenen Gebäuden. Beispielsweise befindet sich die Verarbeitungseinheit in einem ersten Gebäude, z.B. zusammen mit dem Datenspeicher, und die Kontrolleinheit zusammen mit den Datenspeicherelementen in einem weiteren Gebäude. Denkbar ist, dass die Datenverbindung zwischen der Verarbeitungseinheit und den Datenspeicherelementen über ein Netzwerk, z.B. über das Internet, aufgebaut wird.

Außerdem wird vorgeschlagen, dass eine Notstromversorgungseinheit vorhanden ist, welche mit der Kontrolleinheit verbunden ist, sodass bei einem Stromausfall eine Energieversorgung der Kontrolleinheit sicher gestellt ist. Beispielsweise ist hierdurch sichergestellt, dass ein Vergleich der Zeit der Zeitvorgabeeinheit mit einer Vorgabezeit jederzeit erfolgt und damit ein vorgegebener Start einer Datensicherung durch die Kontrolleinheit auch bei oder nach einem Stromausfall erfolgt.

Auch wird vorgeschlagen, dass eine Notstromversorgungseinheit vorhanden ist, welche mit der Datensicherungsvorrichtung verbunden ist, sodass bei einem Stromausfall eine Energieversorgung der Datensicherungsvorrichtung sicher gestellt ist. Vorstellbar ist, dass eine einzige Notstromversorgungseinheit vorhanden ist, welche sowohl die Kontrolleinheit, als auch die Verarbeitungseinheit im Fall eines Stromausfalls mit Energie versorgt.

Beispielsweise ist die Notstromeinheit über die Kontrolleinheit mit den Datenspeicherelementen verbunden, sodass im durch die Kontrolleinheit angeschalteten Zustand die Datenspeicherelemente mit Energie versorgt sind.

Auch erweist es sich von Vorteil, dass jedes Datenspeicherelement mit der Kontrolleinheit elektrisch leitend verbunden ist, sodass die Kontrolleinheit jedes Datenspeicherelement mit Energie versorgen kann.

Beispielsweise ist jedes Datenspeicherelement mit der Schaltvorrichtung elektrisch leitend verbunden. Beispielsweise ist jedes Datenspeicherelement ausschließlich mit der Schaltvorrichtung elektrisch leitend verbunden. Beispielsweise ist hierdurch sicher gestellt, dass durch die Kontrolleinheit jeweils ein einziges Datenspeicherelement aktivierbar und damit mit Energie versorgbar ist und die verbleibenden Datenspeicherelemente durch die Kontrolleinheit stromlos geschaltet sind. Beispielsweise ist die Schaltvorrichtung derart ausgebildet, dass die Schaltvorrichtung immer nur ein einziges Datenspeicherelement aktivieren und mit Energie versorgen kann, während die verbleibenden Datenspeicherelemente stromlos geschaltet sind oder durch Aktivieren eines Speicherelements stromlos geschaltet werden.

Weiter wird vorgeschlagen, dass die Schaltvorrichtung Schaltelemente aufweist, wobei mittels einem Schaltelement eine Energieversorgung eines Datenspeicherelements schaltbar ist. Beispielsweise weist die Schaltvorrichtung Schaltelemente auf, wobei mittels eines einzigen Schaltelements eine Energieversorgung eines Datenspeicherelements schaltbar ist. Beispielsweise ist ein Schaltelement als ein Relais und/oder als ein elektrischer Schalter vorhanden. Hierdurch ist eine Energieversorgung eines Datenspeicherelements physisch an- oder abschaltbar.

Vorteilhafterweise ist die Kontrolleinheit dazu ausgebildet, immer nur ein einziges Datenspeicherelement durch Schalten eines Schaltelements der Schaltvorrichtung mit Energie zu versorgen, während durch die Kontrolleinheit jedes weitere Datenspeicherelement durch Schalten eines weiteren Schaltelements der Schaltvorrichtung energielos bzw. stromlos geschaltet ist. Beispielsweise ist die Kontrolleinheit dazu ausgebildet, die Datenspeicherelemente durch Schalten eines Schaltelements zyklisch mit Strom bzw. mit Energie zu versorgen. Beispielsweise ist die Kontrolleinheit dazu ausgebildet, alle Datenspeicherelemente durch Schalten der Schaltelemente der Schaltvorrichtung stromlos zu schalten, nachdem eine Datenspeicherung beendet ist.

Beispielsweise umfasst die Schaltvorrichtung eine Schaltung, z.B. eine Schaltungslogik, sodass durch Schalten eines Schaltelements, mittels welchem ein Stromkreis geschlossen wird, die verbleibenden Schaltelemente derart geschaltet werden, dass die Stromkreise dieser Schaltelement geöffnet sind.

Ebenfalls wird vorgeschlagen, dass die Schaltvorrichtung dazu ausgebildet ist, immer ein einziges Datenspeicherelement mit Energie zu versorgen und dass eine Energieversorgung aller verbleibender weiterer Datenspeicherelemente abgeschaltet vorhanden ist.

Beispielsweise ist die Schaltvorrichtung dazu ausgebildet, ein Verfahren wie vorangegangen genannt auszuführen, sodass bei Erreichen und/oder Überschreiten einer Vorgabezeit ein einziges erstes Datenspeicherelement mit Energie versorgt wird, wobei die Datenspeicherelemente vor Erreichen und/oder Überschreiten einer Vorgabezeit immer von der Energieversorgung abgetrennt vorhanden sind. Beispielsweise aktiviert die Schaltvorrichtung nach dem Aktivieren des ersten Datenspeicherelements die Verarbeitungseinheit, womit der vorangegangen genannte Speichervorgang der Verarbeitungseinheit eingeleitet und durchgeführt wird. Zum Beispiel deaktiviert sich die Verarbeitungseinheit nach Beendigung des Speichervorgangs selbst. Beispielsweise frägt die Kontrolleinheit der Schaltvorrichtung insbesondere zyklisch den Zustand der Verarbeitungseinheit ab oder die Verarbeitungseinheit sendet der Kontrolleinheit nach Beendigung des Speichervorgangs ein Signal, sodass die Kontrolleinheit nach Beendigung des Speichervorgangs das ersten Datenspeicherelement von der Energieversorgung trennt. Beispielsweise aktiviert die Schaltvorrichtung, sobald eine weitere Vorgabezeit erreicht und/oder überschritten wird, ein weiteres, vom ersten Datenspeicherelement verschiedenes, z.B. zweites Datenspeicherelement und der vorangegangen beschriebene Ablauf beginnt von vorne. Beispielweise wird der Ablauf für alle vorhandenen Datenspeicherelemente nach Erreichen und/oder Überschreiten einer Vorgabezeit wiederholt, bis jedes Datenspeicherelement einmal mit Daten beschrieben ist. Beispielsweise beginnt dann der Ablauf von vorne, das heißt nach Erreichen und/oder Überschreiten einer weiteren Vorgabezeit wird wieder das erste Datenspeicherelement mit Energie versorgt und die vom Datenspeicher abgefragten Daten werden auf dem ersten Datenspeicherelement abgespeichert. Beispielsweise wird hierbei das erste Datenspeicherelement überschrieben, oder die Daten werden zusätzlich auf einen freien Speicherplatz des ersten Datenspeicherelements abgespeichert.

Eine weitere Ausführungsform der Erfindung ist ein System umfassend eine Datensicherungsvorrichtung nach einer der vorangegangen genannten Ausbildungsvarianten und einen Datenspeicher, wobei das System dazu ausgebildet ist, das Verfahren nach einer der vorangegangen genannten Varianten auszuführen.

### Figurenbeschreibung

Ein Ausführungsbeispiel wird anhand der nachstehenden Zeichnungen unter Angabe von weiteren Einzelheiten und Vorteile näher erläutert:
Es zeigen:
- Figur 1: eine Datensicherungsvorrichtung in einer schematischen Darstellung und
- Figur 2: eine weitere Variante einer Datensicherungsvorrichtung in einer schematischen Darstellung

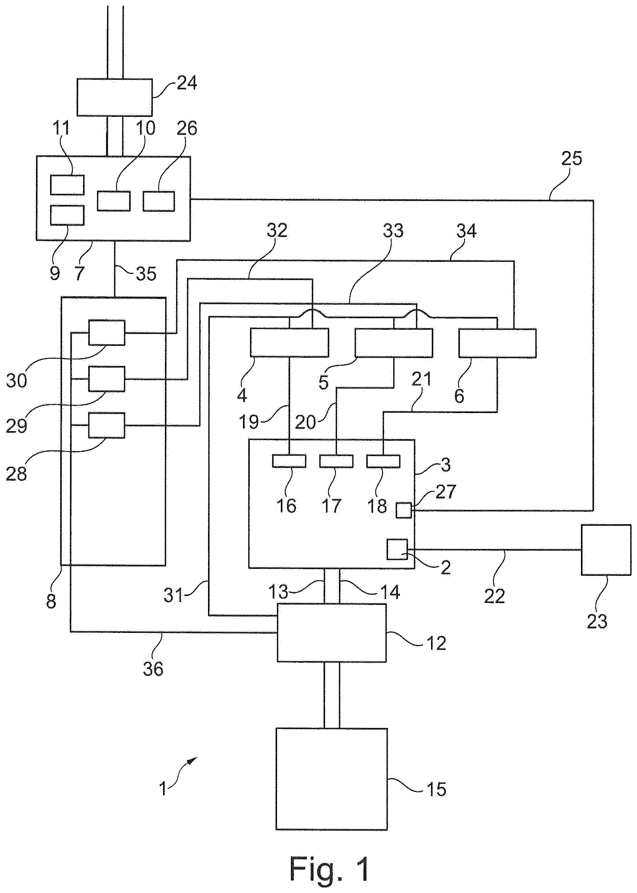

In Figur 1 ist eine Datensicherungsvorrichtung 1 schematisch dargestellt. Beispielsweise umfasst die Datensicherungsvorrichtung 1 eine Datenschnittstelle 2, eine Verarbeitungseinheit 3, Datenspeicherelemente 4 - 6 und eine Kontrolleinheit 7. Beispielsweise ist die Verarbeitungseinheit 3 über eine Datenleitung 22 mit einem Datenspeicher 23 verbunden.

Beispielsweise weist die Kontrolleinheit 7 eine Schaltvorrichtung 8, eine Zeitvorgabeeinheit 9 und ein Steuerungsmodul 10 auf. Vorstellbar ist weiterhin, dass die Kontrolleinheit 7 ein Speichermodul 11 umfasst.

Beispielsweise wird die Verarbeitungseinheit 3 über ein Netzteil 12 und über Energieleitungen 13, 14 mit Energie versorgt. Das Netzteil 12 ist beispielsweise mittels einer unterbrechungsfreien Notstromversorgungseinheit (USV) 15 mit einem Versorgungsstromnetz (nicht gezeigt) verbunden. Beispielsweise ist dadurch auch bei einem Stromausfall im Versorgungsstromnetz eine Energieversorgung der Verarbeitungseinheit 3 bereitgestellt und somit eine Datensicherung gewährleistet.

Beispielsweise ist die Verarbeitungseinheit 3 als ein Computer, z.B. als ein Server, vorhanden. Denkbar ist, dass die Verarbeitungseinheit 3 die Datenspeicherelemente 4 - 6 beinhaltet. Z.B. sind die Datenspeicherelemente 4 - 6 in einem Gehäuse der Verarbeitungseinheit 3 (nicht dargestellt) eingebaut vorhanden.

Denkbar ist weiterhin, dass die Kontrolleinheit 7 mittels einer weiteren unterbrechungsfreien Notstromversorgungseinheit (USV) 24 mit einem Versorgungsstromnetz (nicht gezeigt) verbunden ist. Beispielsweise ist dadurch auch bei einem Stromausfall im Versorgungsstromnetz eine Energieversorgung der Kontrolleinheit 7 bereitgestellt und somit eine planmäßige Datensicherung gewährleistet. Vorstellbar ist auch, dass die Notstromversorgungseinheit 24 und die Notstromversorgungseinheit 15 identisch sind und damit eine einzige Notstromversorgungseinheit sowohl für die Verarbeitungseinheit 3, als auch für die Kontrolleinheit 7 eine unterbrechungsfreie Stromversorgung bereitstellt.

Beispielsweise umfasst die Verarbeitungseinheit 3 Schnittstellen 16 - 18, wobei die Datenspeicherelemente 4 - 6 über Datenleitungen 19 - 21 mit der Verarbeitungseinheit 3 an den Schnittstellen 16 - 18 verbunden sind. Zum Beispiel sind die Datenspeicherelemente 4 - 6 als Festplatten vorhanden. Denkbar ist, dass die Schnittstellen 16 - 18 der Verarbeitungseinheit 3 als USB-, IDE-, eSATA- und/oder SATA-Schnittstellen ausgebildet sind.

Beispielsweise ist die Kontrolleinheit 7 mittels einer Datenleitung 25 mit der Verarbeitungseinheit 3 verbunden. Zum Beispiel umfasst die Datenleitung 25 mehrere Adern oder Kabel. Denkbar ist, dass die Kontrolleinheit 7 über eine Datenschnittstelle 26 der Kontrolleinheit 7 mit der Verarbeitungseinheit 3 über die Datenleitung 25 Daten und/oder Signale austauschen kann. Beispielsweise ist die Datenleitung 25 mit einer Datenschnittstelle 27 der Verarbeitungseinheit 3 gekoppelt. Die Datenschnittstellen 26, 27 können sowohl als digitale und/oder als analoge Schnittstellen vorhanden sein.

Zum Beispiel ist die Kontrolleinheit 7 über eine Daten- und/oder Energieleitung 35 mit der Schaltvorrichtung 8 gekoppelt. Beispielsweise ist hierdurch eine Steuerung und/oder Regelung der Schaltvorrichtung 8 durch die Kontrolleinheit 7 realisierbar.

Beispielsweise umfasst die Schaltvorrichtung 8 Schaltelemente 28 - 30. Zum Beispiel ist jedes Schaltelement 28 - 30 als ein Schalter vorhanden. Beispielsweise sind die Datenspeicherelemente 4 - 6 über eine erste Stromleitung 31 mit dem Netzteil 12 verbunden und über zweite Stromleitungen 32 - 34 jeweils mit einem Schaltelement 28 - 30. Beispielsweise sind die Schaltelemente 28 - 30 über eine weitere Stromleitung 36 mit dem Netzteil 12 verbunden. Hierdurch ist eine Energie- bzw. Stromversorgung eines Datenspeicherelements 4 - 6 nur dann gewährleistet, wenn das jeweilige Schaltelement 28 - 30 den Stromkreis zum Datenspeicherelement 4 - 6 über die Stromleitungen 31, 32, 36; 31, 33, 36 oder 31, 34, 36 schließt.

Beispielsweise ist die Schaltvorrichtung 8 derart ausgebildet, dass immer nur ein Schaltelement 4 - 6 den Stromkreis zum jeweiligen Datenspeicherelement 4 - 6 schließen kann und die anderen beiden Schaltelemente 4 - 6 in diesem Fall blockiert sind, womit diese den Stromkreis nicht schließen können. Beispielsweise kann hierdurch die Verarbeitungseinheit 3 immer nur ein Datenspeicherelement 4 - 6 erkennen und auf diesem Daten abspeichern, da die anderen Datenspeicherelement 4 - 6 stromlos geschaltet sind und damit nicht funktionieren. Zum Beispiel ist hierdurch eine Steuerung oder Regelung, auf welchem Datenspeicherelement 4 - 6 Daten abgespeichert werden sollen, beispielsweise ausschließlich, durch die Kontrolleinrichtung 7 vorgebbar.

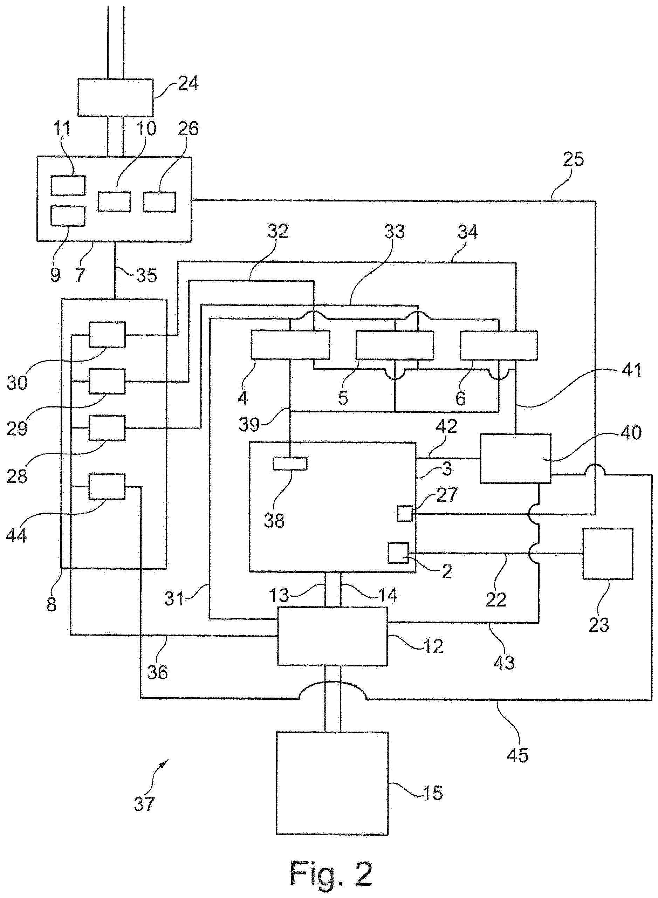

In Figur 2 ist eine weitere Variante einer Datensicherungsvorrichtung 37 gezeigt. Zur leichteren Verständlichkeit sind in Figur 2 Elemente mit dem selben Bezugszeichen versehen.

Die Ausführungsvariante der Datensicherungsvorrichtung 37 unterscheidet sich zur Datensicherungsvorrichtung 1 beispielsweise in der Verwendung einer einzigen Schnittstelle 38, über welche die Datenspeicherelemente 4 - 6 mit einer insbesondere einzigen Datenleitung 39 verbunden sind.

Beispielsweise sind alle Datenspeicherelemente 4 - 6 oder mehrere Datenspeicherelement 4 - 6 mittels einer einzigen Schnittstelle 38 mit der Verarbeitungseinheit 3 verbunden. Dies hat den Vorteil, dass an der Verarbeitungseinheit 3 ein einziger Schnittstellenkontroller 40 notwendig ist, womit ein Kostenvorteil besteht. Beispielsweise weist die Datensicherungsvorrichtung 37, z.B. die Verarbeitungseinheit 3, eine einzige Schnittstelle 38 auf. Beispielsweise sind die Datenspeicherelemente 4 - 6, z.B. alle Datenspeicherelemente 4 - 6 über eine Datenleitung 39 mit einer einzigen Schnittstelle 38 verbunden.

Denkbar ist, dass die Verarbeitungseinheit 3 einen Schnittstellenkontroller 40 aufweist. Beispielsweise ist der Schnittstellenkontroller 40 mit jedem der Datenspeicherelemente 4 - 6 verbunden. Denkbar ist, dass der Schnittstellenkontroller 40 über eine Parallelschaltung 41 mit den Datenspeicherelemente 4 - 6 verbunden ist. Beispielsweise ist der Schnittstellenkontroller 40 mit allen Datenspeicherelementen 4 - 6 verbunden. Z.B. ist der Schnittstellenkontroller 40 als ein Festplattenkontroller vorhanden.

Vorstellbar ist weiterhin, dass eine Energieversorgung des Schnittstellenkontrollers 40 mittels der Schaltvorrichtung 8 schaltbar ist. Hierdurch ist eine Sicherheit der Datensicherungsvorrichtung erhöht. Beispielsweise ist der Schnittstellenkontroller 40 über eine Energieleitung 43 mit dem Netzteil 12 verbunden. Beispielsweise weist die Schaltvorrichtung 8 ein Schaltelement 44 auf, mittels welchem der Schnittstellenkontroller 40 über eine Energieleitung 45 schaltbar ist. Beispielsweise ist der Schnittstellenkontroller 40 Bestandteil der Datensicherungsvorrichtung 37. Z.B. ist der Schnittstellenkontroller 40 als ein von der Verarbeitungseinheit 3 separates Element vorhanden. Beispielsweise ist der Schnittstellenkontroller 40 mit der Verarbeitungseinheit 3 mittels einer Steuerleitung 42 verbunden.

### Bezugszeichenliste

| | | | |
|---|---|---|---|
| 1 | Datensicherungsvorrichtung | 24 | Notstromversorgungseinheit |
| 2 | Datenschnittstelle | 25 | Datenleitung |
| 3 | Verarbeitungseinheit | 26 | Datenschnittstelle |
| 4 | Datenspeicherelement | 27 | Datenschnittstelle |
| 5 | Datenspeicherelement | 28 | Schaltelement |
| 6 | Datenspeicherelement | 29 | Schaltelement |
| 7 | Kontrolleinheit | 30 | Schaltelement |
| 8 | Schaltvorrichtung | 31 | Stromleitung |
| 9 | Zeitvorgabeeinheit | 32 | Stromleitung |
| 10 | Steuerungsmodul | 33 | Stromleitung |
| 11 | Speichermodul | 34 | Stromleitung |
| 12 | Netzteil | 35 | Daten- und/oder Energieleitung |
| 13 | Energieleitung | | |
| 14 | Energieleitung | 36 | Stromleitung |
| 15 | Notstromversorgungseinheit | 37 | Datensicherungsvorrichtung |
| 16 | Schnittstelle | 38 | Schnittstellen |
| 17 | Schnittstelle | 39 | Datenleitung |
| 18 | Schnittstelle | 40 | Schnittstellenkontroller |
| 19 | Datenleitung | 41 | Parallelschaltung |
| 20 | Datenleitung | 42 | Steuerleitung |
| 21 | Datenleitung | 43 | Energieleitung |
| 22 | Datenleitung | 44 | Schaltelement |
| 23 | Datenspeicher | 45 | Energieleitung |

## Patentansprüche

1. Verfahren zur Datensicherung, wobei das Verfahren folgende Verfahrensschritte aufweist:
- Anschalten einer Energieversorgung eines ersten Datenspeicherelements (4) einer Datensicherungsvorrichtung (1) durch eine Kontrolleinheit (7) der Datensicherungsvorrichtung,
- Aktivieren einer Verarbeitungseinheit (3) durch die Kontrolleinheit (7)
- Aufbau einer Datenverbindung der Verarbeitungseinheit (3) mit dem ersten Datenspeicherelement (4)
- Aufbau einer Datenverbindung der Verarbeitungseinheit (3) mit einem Datenspeicher (23)
- Abfrage des Datenspeichers durch die Verarbeitungseinheit (3)
- Speichern der vom Datenspeicher (23) abgefragten Daten auf dem ersten Datenspeicherelement (4) durch die Verarbeitungseinheit (3)
- Deaktivieren der Verarbeitungseinheit (3), wobei unter Deaktivieren der Verarbeitungseinheit ein Trennen der Verarbeitungseinheit von der Energieversorgung zu verstehen ist
- Abschalten einer Energieversorgung des ersten Datenspeicherelements (4) durch die Kontrolleinheit (7).

2. Verfahren zur Datensicherung nach dem vorhergehenden Anspruch 1, wobei das Verfahren weitere, insbesondere aufeinander folgende, Verfahrensschritte aufweist:
- Abfragen einer Zeit einer Zeitvorgabeeinheit (9) einer Datensicherungsvorrichtung (1) durch die Kontrolleinheit (7) der Datensicherungsvorrichtung (1)
- Abgleichen der abgefragten Zeit der Zeitvorgabeeinheit (9) mit einer in der Kontrolleinheit (7) abgespeicherten Vorgabezeit durch ein Steuerungsmodul (10) der Kontrolleinheit (7)

3. Verfahren zur Datensicherung nach einem der vorhergehenden Ansprüche, wobei das Verfahren weitere, insbesondere aufeinander folgende, Verfahrensschritte aufweist:
- Anschalten einer Energieversorgung eines zweiten Datenspeicherelements (5) der Datensicherungsvorrichtung (1) durch die Kontrolleinheit (7), wenn eine Zeit der Zeitvorgabeeinheit (9) eine weitere Vorgabezeit erreicht hat
- Aktivieren der Verarbeitungseinheit (3) durch die Kontrolleinheit (7)
- Aufbau einer Datenverbindung der Verarbeitungseinheit (3) mit dem zweiten Datenspeicherelement (5)
- Aufbau der Datenverbindung der Verarbeitungseinheit (3) mit dem Datenspeicher (23) oder einem weiteren Datenspeicher
- Abfrage des Datenspeichers durch die Verarbeitungseinheit (3)
- Speichern der vom Datenspeicher (23) abgefragten Daten auf dem zweiten Datenspeicherelement (5) durch die Verarbeitungseinheit (3)
- Deaktivieren der Verarbeitungseinheit (3)
- Abschalten einer Energieversorgung des zweiten Datenspeicherelements (5) durch die Kontrolleinheit (7).

4. Datensicherungsvorrichtung (1), wobei die Datensicherungsvorrichtung (1) dazu ausgebildet ist, ein Verfahren nach einem der vorangegangen genannten Ansprüche auszuführen, wobei die Datensicherungsvorrichtung (1) eine Datenschnittstelle (2) aufweist, wobei die Datensicherungsvorrichtung (1) mittels der Datenschnittstelle (2) mit einem Datenspeicher (23) verbindbar ist, wobei die Datensicherungsvorrichtung (1) eine Verarbeitungseinheit (3) aufweist, wobei die Datensicherungsvorrichtung (1) zwei oder mehr Datenspeicherelemente (4 - 6) aufweist, wobei die Datenspeicherelemente (4 - 6) dazu ausgebildet sind, Daten des Datenspeichers (23) abzuspeichern, wobei die Verarbeitungseinheit (3) dazu ausgebildet ist, die Datensicherungsvorrichtung (1) über die Datenschnittstelle (2) mit dem Datenspeicher (23) zu verbinden, Daten vom Datenspeicher (23) abzufragen und auf einem der Datenspeicherelemente (4 - 6) der Datensicherungsvorrichtung (1) abzuspeichern, wobei die Datensicherungsvorrichtung (1) eine Kontrolleinheit (7) aufweist, wobei die Kontrolleinheit (7) eine Schaltvorrichtung (8), eine Zeitvorgabeeinheit (9) und ein Steuerungsmodul (10) umfasst, wobei die Datenspeicherelemente (4 - 6) mit der Schaltvorrichtung (8) elektrisch leitend verbunden sind und ausschließlich durch die Schaltvorrichtung (8) mit Energie versorgt werden, wobei jedes Datenspeicherelement (4 - 6) mittels einer separaten Stromleitung (32 - 34) mit der Schaltvorrichtung (8) verbunden ist, sodass jedes Datenspeicherelement (4 - 6) durch die Schaltvorrichtung (8) separat mit Energie versorgbar ist, wobei die Zeitvorgabeeinheit (9) eine Zeit an das Steuerungsmodul (10) ausgibt, wobei die Kontrolleinheit (7) dazu ausgebildet ist, die Verarbeitungseinheit (3) von der Energieversorgung zu trennen.

5. Datensicherungsvorrichtung (1) nach dem vorangegangenen Anspruch 4, **dadurch gekennzeichnet, dass** eine Notstromversorgungseinheit (24) vorhanden ist, welche mit der Kontrolleinheit (7) verbunden ist, sodass bei einem Stromausfall eine Energieversorgung der Kontrolleinheit (7) sicher gestellt ist.

6. Datensicherungsvorrichtung (1) nach einem der vorangegangenen Ansprüche 4 oder 5, **dadurch gekennzeichnet, dass** eine Notstromversorgungseinheit (15) vorhanden ist, welche mit der Datensicherungsvorrichtung (1) verbunden ist, sodass bei einem Stromausfall eine Energieversorgung der Datensicherungsvorrichtung (1) sicher gestellt ist.

7. Datensicherungsvorrichtung (1) nach einem der vorangegangenen Ansprüche 4 bis 6, **dadurch gekennzeichnet, dass** jedes Datenspeicherelement (4 - 6) mit der Kontrolleinheit (7) elektrisch leitend verbunden ist, sodass die Kontrolleinheit (7) jedes Datenspeicherelement (4 - 6) mit Energie versorgen kann.

8. Datensicherungsvorrichtung (1) nach einem der vorangegangenen Ansprüche 4 bis 7, **dadurch gekennzeichnet, dass** die Schaltvorrichtung (8) Schaltelemente (28 - 30) aufweist, wobei mittels einem Schaltelement (28 - 30) eine Energieversorgung eines Datenspeicherelements (4 - 6) schaltbar ist.

9. Datensicherungsvorrichtung (1) nach einem der vorangegangenen Ansprüche 4 bis 8, **dadurch gekennzeichnet, dass** die Schaltvorrichtung (8) dazu ausgebildet ist, immer ein einziges Datenspeicherelement (4) mit Energie zu versorgen und eine Energieversorgung aller verbleibender weiterer Datenspeicherelemente (5, 6) abgeschaltet vorhanden ist.

10. Datensicherungsvorrichtung (1) nach einem der vorangegangenen Ansprüche 4 bis 8, **dadurch gekennzeichnet, dass** die Verarbeitungseinheit eine Standarddatenschnittstelle aufweist, wobei alle Datenspeicherelemente mit der Standarddatenschnittstelle über einen einzigen Datenbus verbunden sind, wobei der Datenbus die Datenspeicherelemente mittels einer Parallelschaltung mit der Standarddatenschnittstelle verbindet.

11. System umfassend eine Datensicherungsvorrichtung (1) nach einem der vorangegangen genannten Ansprüche 4 bis 9 und einen Datenspeicher (23), wobei das System das Verfahren nach einem der vorangegangen genannten Ansprüche 1 bis 3 ausführt.

## Claims

1. Data backup method, wherein the method comprises the following method steps:
- switching on an energy supply of a first data storage element (4) of a data backup device (1) by means of a control unit (7) of the data backup device,
- activating a processing unit (3) by means of the control unit (7),
- setting up a data connection between the processing unit (3) and the first data storage element (4),
- setting up a data connection between the processing unit (3) and a data memory (23),
- querying the data memory by means of the processing unit (3),
- storing the data queried from the data memory (23) on the first data storage element (4) by means of the processing unit (3),
- deactivating the processing unit (3), wherein deactivating the processing unit is understood to mean disconnecting the processing unit from the energy supply,
- switching off an energy supply of the first data storage element (4) by means of the control unit (7).

2. Data backup method according to the preceding Claim 1, wherein the method comprises further, in particular consecutive, method steps:
- querying a time of a time setting unit (9) of a data backup device (1) by means of the control unit (7) of the data backup device (1),
- synchronizing the queried time of the time setting unit (9) with a set time stored in the control unit (7) by means of a control module (10) of the control unit (7).

3. Data backup method according to one of the preceding claims, wherein the method comprises further, in particular consecutive, method steps:
- switching on an energy supply of a second data storage element (5) of the data backup device (1) by means of the control unit (7) if a time of the time setting unit (9) has reached a further set time,
- activating the processing unit (3) by means of the control unit (7),
- setting up a data connection between the processing unit (3) and the second data storage element (5),
- setting up the data connection between the processing unit (3) and the data memory (23) or a further data memory,
- querying the data memory by means of the processing unit (3),
- storing the data queried from the data memory (23) on the second data storage element (5) by means of the processing unit (3),
- deactivating the processing unit (3),
- switching off an energy supply of the second data storage element (5) by means of the control unit (7).

4. Data backup device (1), wherein the data backup device (1) is designed to carry out a method according to one of the aforementioned claims, wherein the data backup device (1) has a data interface (2), wherein the data backup device (1) is connectable by means of the data interface (2) to a data memory (23), wherein the data backup device (1) has a processing unit (3), wherein the data backup device (1) has two or more data storage elements (4 - 6), wherein the data storage elements (4 - 6) are designed to store data from the data memory (23), wherein the processing unit (3) is designed to connect the data backup device (1) via the data interface (2) to the data memory (23), to query data from the data memory (23) and store said data on one of the data storage elements (4 - 6) of the data backup device (1), wherein the data backup device (1) has a control unit (7), wherein the control unit (7) comprises a switching device (8), a time setting unit (9) and a control module (10), wherein the data storage elements (4 - 6) have an electrically conducting connection to the switching device (8) and are supplied with energy exclusively by the switching device (8), wherein each data storage element (4 - 6) is connected to the switching device (8) by means of a separate power line (32 - 34) so that each data storage element (4 - 6) is separately suppliable with energy by the switching device (8), wherein the time setting unit (9) outputs a time to the control module (10), wherein the control unit (7) is designed to disconnect the processing unit (3) from the energy supply.

5. Data backup device (1) according to the preceding Claim 4, **characterized in that** an emergency power supply unit (24) is present and is connected to the control unit (7) so that an energy supply of the control unit (7) is ensured in the event of a power failure.

6. Data backup device (1) according to one of the preceding Claims 4 or 5, **characterized in that** an emergency power supply unit (15) is present and is connected to the data backup device (1) so that an energy supply of the control unit (1) is ensured in the event of a power failure.

7. Data backup device (1) according to one of the preceding Claims 4 to 6, **characterized in that** each data storage element (4 - 6) has an electrically conducting connection to the control unit (7) so that the control unit (7) can supply each data storage element (4 - 6) with energy.

8. Data backup device (1) according to one of the preceding Claims 4 to 7, **characterized in that** the switching device (8) has switching elements (28 - 30), wherein an energy supply of a data storage element (4 - 6) is switchable by means of a switching element (28 - 30) .

9. Data backup device (1) according to one of the preceding Claims 4 to 8, **characterized in that** the switching device (8) is designed to supply only a single data storage element (4) with energy, and an energy supply of all remaining further data storage elements (5, 6) is present in a switched off state.

10. Data backup device (1) according to one of the preceding Claims 4 to 8, **characterized in that** the processing unit has a standard data interface, wherein all data storage elements are connected to the standard data interface via a single data bus, wherein the data bus connects the data storage elements by means of a parallel circuit to the standard data interface.

11. System comprising a data backup device (1) according to one of the aforementioned Claims 4 to 9 and a data memory (23), wherein the system carries out the method according to one of the aforementioned Claims 1 to 3.

## Revendications

1. Procédé de sauvegarde des données, ledit procédé comportant les étapes suivantes :
- connecter une alimentation en énergie d'un premier élément de mémorisation de données (4) d'un dispositif de sauvegarde de données (1) par le biais d'une unité de contrôle (7) du dispositif de sauvegarde de données,
- activer une unité de traitement (3) par le biais de l'unité de contrôle (7),
- établir une liaison de données entre l'unité de traitement (3) et le premier élément de mémorisation de données (4),
- établir une liaison de données entre l'unité de traitement (3) et une mémoire de données (23),
- consulter la mémoire de données par le biais de l'unité de traitement (3),
- mémoriser les données, consultées dans la mémoire de données (23), dans le premier élément de mémorisation de données (4) par le biais de l'unité de traitement (3),
- désactiver l'unité de traitement (3), désactiver l'unité de traitement signifiant séparer l'unité de traitement de l'alimentation en énergie,
- déconnecter l'alimentation en énergie du premier élément de mémorisation de données (4) par le biais de l'unité de contrôle (7).

2. Procédé de sauvegarde de données selon la revendication précédente 1, ledit procédé comportant en outre des étapes suivantes, notamment successives:
- consulter un temps d'une unité de spécification de temps (9) d'un dispositif de sauvegarde de données (1) par le biais de l'unité de contrôle (7) du dispositif de sauvegarde de données (1),
- adapter le temps consulté de l'unité de spécification de temps (9) à un temps spécifié mémorisé dans l'unité de contrôle (7) par le biais d'un module de commande (10) de l'unité de contrôle (7).

3. Procédé de sauvegarde de données selon l'une des revendications précédentes, le procédé comportant en outre les étapes suivantes, notamment successives :
- connecter une alimentation en énergie d'un deuxième élément de mémorisation de données (5) du dispositif de sauvegarde de données (1) par le biais de l'unité de contrôle (7) lorsqu'un temps de l'unité de spécification de temps (9) a atteint un autre temps spécifié,
- activer l'unité de traitement (3) par le biais de l'unité de contrôle (7),
- établir une liaison de données entre l'unité de traitement (3) et le deuxième élément de mémorisation de données (5),
- établir la liaison de données entre l'unité de traitement (3) et la mémoire de données (23) ou une autre mémoire de données,
- consulter la mémoire de données par le biais de l'unité de traitement (3),
- mémoriser les données, consultées dans la mémoire de données (23), dans le deuxième élément de mémorisation de données (5) par le biais de l'unité de traitement (3),
- désactiver l'unité de traitement (3),
- déconnecter l'alimentation en énergie du deuxième élément de mémorisation de données (5) par le biais de l'unité de contrôle (7).

4. Dispositif de sauvegarde de données (1), le dispositif de sauvegarde de données (1) étant conçu pour mettre en oeuvre un procédé selon l'une des revendications précédentes, le dispositif de sauvegarde de données (1) comportant une interface de données (2), le dispositif de sauvegarde de données (1) pouvant être relié à une mémoire de données (23) au moyen de l'interface de données (2), le dispositif de sauvegarde de données (1) comportant une unité de traitement (3), le dispositif de sauvegarde de données (1) comportant deux éléments de mémorisation de données ou plus (4 - 6), les éléments de mémorisation de données (4 - 6) étant conçus pour mémoriser des données de la mémoire de données (23), l'unité de traitement (3) étant conçue pour relier le dispositif de sauvegarde de données (1) à la mémoire de données (23) par le biais de l'interface de données (2), consulter des données dans la mémoire de données (23) et les mémoriser dans l'un des éléments de mémorisation de données (4 - 6) du dispositif de sauvegarde de données (1), le dispositif de sauvegarde de données (1) comportant une unité de contrôle (7), l'unité de contrôle (7) comprenant un dispositif de commutation (8), une unité de spécification de temps (9) et un module de commande (10), les éléments de mémorisation de données (4 - 6) étant reliés électriquement au dispositif de commutation (8) et étant alimentés en énergie exclusivement par le dispositif de commutation (8), chaque élément de mémorisation de données (4 - 6) étant relié au dispositif de commutation (8) au moyen d'une ligne électrique séparée (32 - 34), de sorte que chaque élément de mémorisation de données (4 - 6) puisse être alimenté en énergie séparément par le dispositif de commutation (8), l'unité de spécification de temps (9) délivrant un temps au module de commande (10), l'unité de contrôle (7) étant conçue pour séparer l'unité de traitement (3) de l'alimentation en énergie.

5. Dispositif de sauvegarde de données (1) selon la revendication 4 précédente, **caractérisé en ce qu'**une unité d'alimentation électrique de secours (24) est présente, qui est reliée à l'unité de contrôle (7), de sorte qu'une alimentation en énergie de l'unité de contrôle (7) soit assurée en cas de panne de courant.

6. Dispositif de sauvegarde de données (1) selon l'une des revendications précédentes 4 ou 5, **caractérisé en ce qu'**une unité d'alimentation électrique de secours (15) est présente, qui est reliée au dispositif de sauvegarde de données (1), de sorte qu'une alimentation en énergie du dispositif de sauvegarde des données (1) soit assurée en cas de panne de courant.

7. Dispositif de sauvegarde de données (1) selon l'une des revendications précédentes 4 à 6, **caractérisé en ce que** chaque élément de mémorisation de données (4 - 6) est relié électriquement à l'unité de contrôle (7), de sorte que l'unité de contrôle (7) puisse alimenter en énergie chaque élément de mémorisation de données (4 - 6).

8. Dispositif de sauvegarde de données (1) selon l'une des revendications précédentes 4 à 7, **caractérisé en ce que** le dispositif de commutation (8) comporte des éléments de commutation (28 - 30), une alimentation en énergie d'un élément de mémorisation de données (4 - 6) pouvant être commutée au moyen d'un élément de commutation (28 - 30) .

9. Dispositif de sauvegarde de données (1) selon l'une des revendications précédentes 4 à 8, **caractérisé en ce que** le dispositif de commutation (8) est conçu pour toujours alimenter en énergie un seul élément de mémorisation de données (4) et une alimentation en énergie de tous les autres éléments de mémorisation de données (5, 6) restants étant présente à l'état déconnecté.

10. Dispositif de sauvegarde de données (1) selon l'une des revendications précédentes 4 à 8, **caractérisé en ce que** l'unité de traitement comporte une interface de données standard, tous les éléments de mémorisation de données étant reliés à l'interface de données standard par le biais d'un seul bus de données, le bus de données reliant les éléments de mémorisation de données à l'interface de données standard par un montage en parallèle.

11. Système comprenant un dispositif de sauvegarde de données (1) selon l'une des revendications précédentes 4 à 9 et une mémoire de données (23), le système mettant en oeuvre le procédé selon l'une des revendications précédentes 1 à 3.
